# EUROPEAN PATENT APPLICATION

(11) **EP 3 447 900 A1**
(43) Date of publication of application: **27.02.2019**
(21) Application number: 17785617.6
(22) Date of filing: 16.02.2017
(51) Int. Cl.: H02M 7/48, G06Q 50/06

(54) **POWER CONVERSION DEVICE AND POWER CONVERSION DEVICE MANAGEMENT SYSTEM**

(30) Priority: 20.04.2016 JP 2016084365
(71) Applicant: Hitachi Industrial Equipment Systems Co., Ltd., Tokyo 101-0022 (JP)
(72) Inventor: SASAKI, Masataka, Tokyo 101-0022 (JP); EJIMA, Shingo, Tokyo 101-0022 (JP); ARAO, Yusuke, Tokyo 101-0022 (JP); UCHINO, Yoshihiro, Tokyo 101-0022 (JP)
(74) Representative: MERH-IP Matias Erny Reichl Hoffmann Patentanwälte PartG mbB
(86) International application number: PCT/JP2017/005683
(87) International publication number: WO 2017/183272

(57) **Abstract**

The purpose of the present invention is to provide a billing system with consideration of product service life in order to provide a power converter for a usage-based billing system. To achieve this purpose, a power conversion device management system comprising a power conversion device, a management server, and a communication network connecting the power conversion device with the management server are provided. The power conversion device is equipped with a current detection unit for detecting phase currents of a main circuit and a communication unit for communicating with the management server via a communication network. The management server is provided with a billing processing unit for performing a billing procedure on the basis of a billing amount calculated from the phase currents of the main circuit detected by the current detection parts.

## Description

### Technical Field

The present invention relates to a power conversion device for a usage-based billing service and a power conversion device management system.

### Background Art

As a usage-based billing service of a power conversion device represented by a general-purpose inverter that drives an electric motor such an induction motor that provides power to a fan and a pump, there is a technology that is disclosed by Japanese Patent Application Laid-Open No. 2005-198431 (PTL-1). Described in this PTL-1 is "An inverter device that is introduced into target load equipment including an electric motor and that is used for controlling the operation of the electric motor, the inverter device including: a calculation processing unit including means that presumably calculates power consumption data regarding the above target load equipment before the introduction of the inverter device, and means that calculates the inverter-controlling operation data of the electric motor and calculates, on the basis of the inverter-controlling operation data and the presumably calculated power consumption data, advantageous charge data corresponding to power consumption saving due to the difference between power consumptions brought about by both data; and an output unit that outputs the advantageous charge data.

### Citation List

### Patent Literature

PTL 1: Japanese Patent Application Laid-Open No. 2005-198431

### Summary of Invention

### Technical Problem

In PTL-1, there is a prerequisite that, in order to grasp a consumed power that is regarded as a reference for billing information regarding an inverter device, a current detection means typified by a current transformer and a voltage detection means typified by a voltage detection transformer (VT) are installed independently of the above inverter device. However, in the case where an inverter device used for a usage-based billing system is provided, it requires an additional cost from the provider of the inverter device and a user to install independent current detection means and independent voltage detection means, which leads to the increase of a usage-based billing charge for the inverter device.

In addition, the power consumption of an electric motor is not always proportional to the current of the motor. For example, if an induction motor is used as the electric motor, there is a case where, even while the motor is stopping, it is necessary for a current to flow at a low voltage because the motor generates a locking torque, so that power consumption is generated at least that much.

Furthermore, the output current of a power conversion device is cited as one of causes that reduces the life of a power converter. However, in PLT-1, billing information does not include consideration given to the magnitude of the value of the output current.

One of the objects of the present invention is to provide a power conversion device and a power conversion device management system for a usage-based billing system while the configuration of the billing system is simplified and consideration is given to the life of a power converter.

### Solution to Problem

In order to solve the abovementioned problem, the power conversion device management system according to the present invention includes: a power conversion device; a management server; and a communication network that connects the power conversion device with the management server as an example. Here, the power conversion device is configured to include a current detection unit for detecting the phase currents of a main circuit, and a communication unit that communicates with the management server via the communication network, and the management server includes a billing processing unit for performing a billing procedure on the basis of a billing charge calculated from the phase currents of the main circuit that are detected by the current detection unit. Advantageous Effects of Invention

According to the present invention, the configuration of the billing system can be simplified, and a billing charge in conjunction with the life of a power converter can be imposed.

### Brief Description of Drawings

Figure 1 is the schematic block diagram of a power conversion device management system according to an example.
Figure 2 is the schematic block diagram of a control unit inside a power conversion device according to the example.
Figure 3 is the schematic block diagram of a management server according to the example.
Figure 4 is a flowchart showing the steps of a rental procedure according to the example.
Figure 5 is a flowchart showing the steps of an inverter configuration procedure according to the example.
Figure 6 is a flowchart showing the steps of a billing procedure according to the example.

### Description of Embodiments

Hereinafter, an example of a power conversion device and an example of a power conversion device management system according to the present invention will be explained with reference to the accompanying drawings.

### <Example>

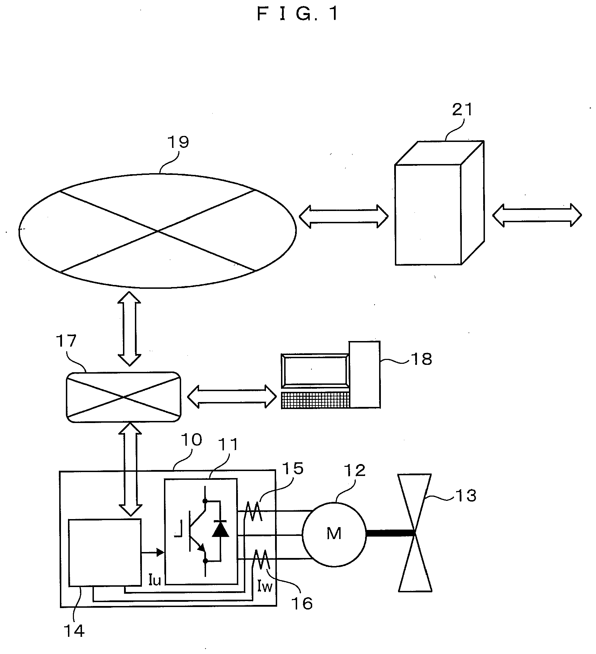

Figure 1 is a block diagram of a power conversion device management system according to this example in which the connection status of respective instruments is shown. However, the connection status of the present invention is not always limited to the above connection status.

In Figure 1, a general purpose inverter, in which an external alternate-current voltage source is rectified to generate an direct-current voltage, and an alternate-current voltage obtained through PWM control performed on the direct-current voltage by a switching circuit composed of power devices is output, is regarded as an example of the power conversion device, and in the following descriptions, the power conversion device will be termed an inverter. In addition, the configuration of procedures from the lease contract to the billing of an inverter will be described in this example.

In Figure 1, an inverter 10 is supplied with electricity from an external power supply (not shown), an alternate-current voltage is applied to a motor 12 from the three-phase output axes of a main circuit 11 composed of power devices such as IGBTs, and a fan 13, for example, is connected to the output shaft of the motor 12 as a load. The main circuit 11 of the inverter 10 is switchingly controlled by a control unit 14 embedded in the inverter 10. Furthermore, the inverter 10 includes current sensors 15 and 16 that are current detection units embedded in the output units of two phases of the three output phases of the main circuit, and the output signals of the current sensors 15 and 16 are input into the control unit 14 to be used for the control of the inverter 10. Although Figure 1 shows that the current sensors are installed in the two output phases, it is conceivable that a method for detecting the current of the direct current unit of the main circuit is adopted instead.

The inverter 10 is connected to a communication network 17, and configured to be able to communicate with external devices via the communication network. The communication network 17 is, for example, a communication circuit that is installed in a manufacturing facility, and it is an LAN compliant with a standard communication procedure such as the TCP/IP protocol.

The communication network 17 is connected to a public communication network 19 via a communication relay device (not shown). A management server 21 that is possessed or managed by a lease company that leases the inverter 10 is connected to the public communication network 19. The public communication network 19 is the Internet network, for example. A communication line is formed between the management server 21 is connected to the inverter 10 via the public communication network 19 and the communication network 17, so that the management server 21 and the inverter 10 are configured to be able to communicate with each other. A PC 18 is connected to the communication network 17, and the PC 18 is configured to be able to communicate with the inverter 10 and the management server 21.

The inverter 10 is rented by a user from the lease company, and the management server 21 is possessed or managed by the lease company. The PC 18 is a computer used for the user to perform the configuration of the inverter 10 etc. or to monitor the inverter 10.

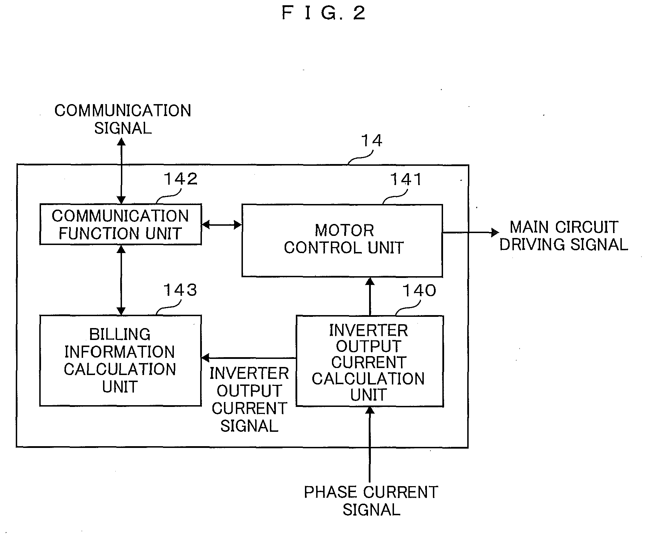

Figure 2 is a schematic block diagram of a control unit 14. In Figure 2, an inverter output current is calculated by an inverter output current calculation unit 140 using phase current signals from the current sensors 15 and 16, and the control function that is the primary function of the inverter 10 is achieved through the operation of a motor control unit 141. In addition, the control unit 14 includes a communication function unit 142, and the control unit 14 is engaged in communication via the communication network 17 in the inverter 10. Furthermore, the control unit 14 includes a billing information calculation unit 143 that calculates after-mentioned billing information. In such a way, the control unit 14 includes a function that enables a user to set the network connection setting such as the IP address of the inverter 10, and a Web server function as well as the control function that is the primary function of the inverter 10, so that the user can access the control unit 14 using a Web browser installed on the PC 18 connected to the communication network 17. In addition, the control unit 14 includes a function in which the control unit 14 communicates with the management server 21 using a program that links with the Web server function embedded in the control unit 14.

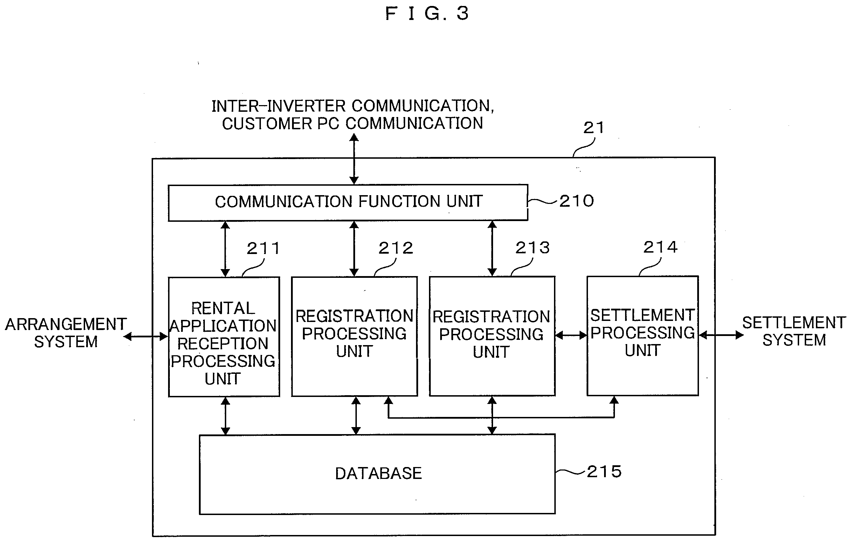

Figure 3 shows the schematic block diagram of the management server 21. Figure 3 shows that the management server 21 includes functions of executing plural pieces of processing from the reception of rental applications for general-purpose inverters to billing processing as well as the function of communication between inverters 10. In other words, the management server 21 includes: a communication function unit 210; a rental application reception processing unit 211; a registration processing unit 212; a billing processing unit 213; a settlement processing unit 214; and a database 215.

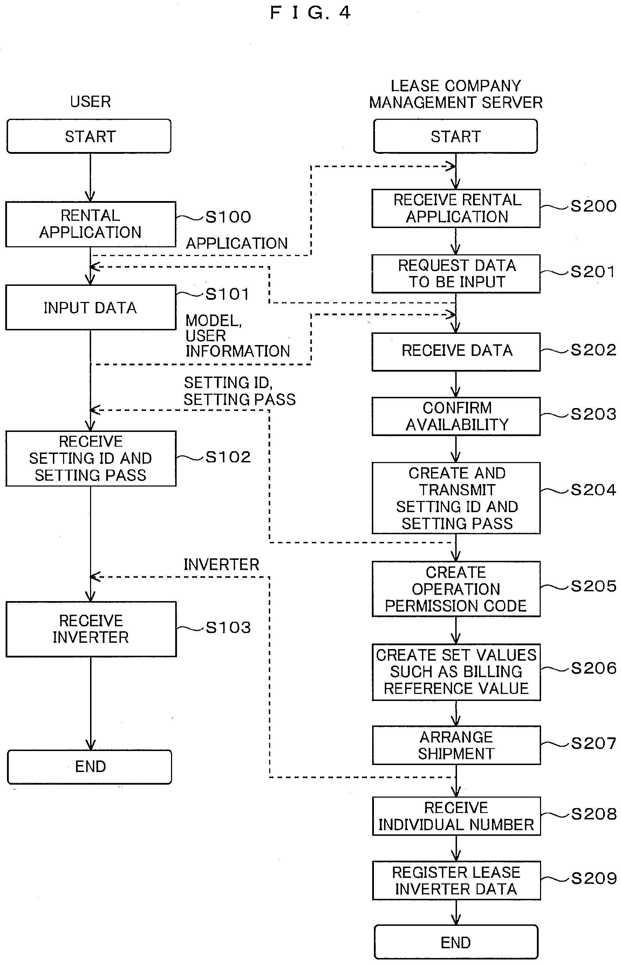

Hereinafter, functions included in the management server 21 and the inverter 10 will be explained with reference to procedure flowcharts shown in Figure 4 to Figure 6. Here, in the following descriptions, the description that the inverter 10 communicates with external instruments via the communication network 17 means that the control unit 14 included in the inverter 10 communicates with the external instruments.

First, a rental application procedure between a lease company and an inverter user according to this example will be explained with reference to Figure 4. The user executes a rental application while communicating with the management server 21 possessed by the lease company using a computer terminal or the like that can be connected to the public communication network 19. As a concrete communication method used for the above communication, because the public communication network 19 is a public Internet network, it is preferable that the user should access a rental application Web site of the management server 21 using a Web browser installed on the computer terminal.

In Figure 4, first, when the user applies for the rental of an inverter at step S100, the management server 21 receives the application at step S200, and requests the user to input data regarding information about a model of the inverter the user wants to rent including a type of the inverter, user information such as the name, address, and mail address of the company to which the user belongs (at step S201). Accordingly, the user input the data at the computer terminal (at step S101).

The management server 21 receives the input data (at step S202), confirms the availability of the inverter the user wants to rent with reference to the input information about the model of the inverter the user wants to rent (at step S203), and after the availability of the inverter is confirmed, the management server 21 creates a setting ID and a setting PASS used in the installation procedure of the inverter. The setting ID and the setting PASS are transmitted to the user along with a notification of delivery schedule of the lease inverter leased to the user (at step S204). It is preferable that a method of transmitting the setting ID, the setting PASS, and other items should be a method in which the notification is displayed on the Web browser or is transmitted via an e-mail or the like.

After creating an operation permission code to be set for the inverter to be leased (at step S205), the management server 21 creates setting values such as a billing reference value (at step S206), and performs a shipment arrangement - such as setting the operation permission code, the billing reference value, and the IP address of the management server that is used for lease management to the inverter itself, and requesting the transmission of the lease inverter to the user - on a shipment management/arrangement system (not shown) (at step S207), and the management server 21 receives the individual number of the inverter from the shipment management/arrangement system (at step S208). The user receives the inverter at step S103.

A lease inverter according to this example is configured in such a way that the main circuit of the inverter is fixed to the nonoperation mode in the shipment status of the inverter, and the inverter is configured not to operate as long as the management server does not input the operation permission code to the inverter via the communication network.

Furthermore, the billing reference value set to a lease inverter is set as a billing charge for the lease inverter per Aha, which makes it possible for a billing charge for the inverter to be calculated in the inverter itself.

In the management server, the registration processing unit 212 shown in Figure 3 stores the user information, the setting ID, the setting PASS, the operation permission code, and the billing address of the user in the database 215 for lease inverters installed inside or outside of the management server (at step S209).

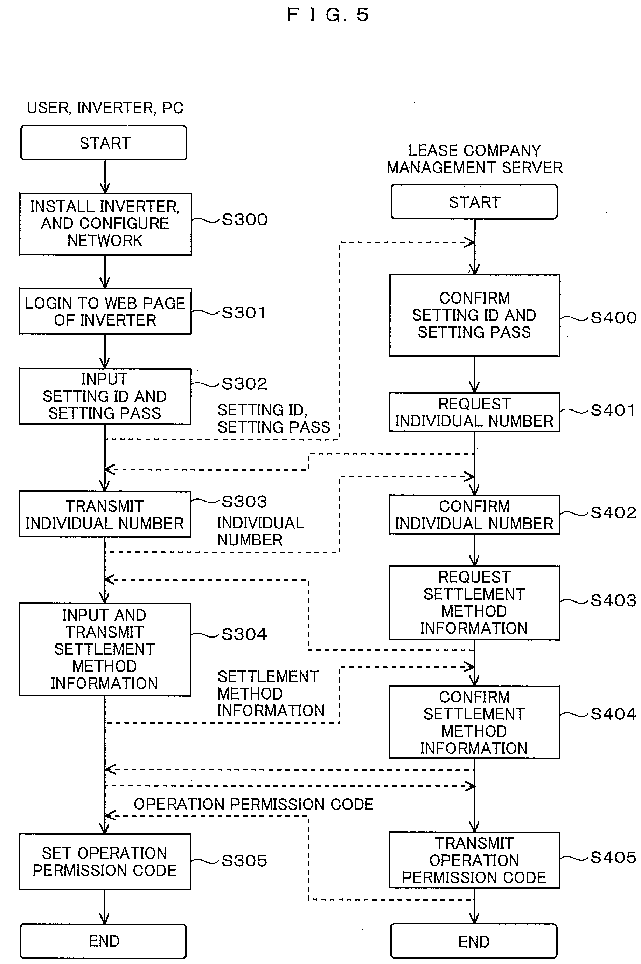

Next, an inverter configuration procedure according to this example that is made by a user will be explained along with explanations about the behaviors of the inverter 10 and the management server 21 possessed by the lease company with reference to Figure 5.

In Figure 5, the user installs the inverter 10 received from the lease company, and connects the inverter 10 to the communication network 17, and at the same time, executes a network configuration such as setting an IP address for the inverter 10 (at step S300). The inverter 10 includes a function to communicate with the PC 18 via the Web browser in response to the access from the PC 18, and the user logins from the PC 18 to communicate with the inverter 10 by designating the IP address set for the inverter 108 (at step S301).

The inverter 10 requests the user to input the setting ID and the setting PASS, and the user inputs the setting ID and the setting PASS received at the time of the rental application for the inverter 10 from the PC 18 (at step S302). The inverter 10 transmits the input setting ID and the input setting PASS to the management server 21, and the management server 21 confirms the matching of the setting ID and the setting PASS transmitted from the inverter 10 with those stored in the database respectively (at step S400). The management server 21 transmits the result of the confirmation to the inverter 10, and at the same time requests the inverter 10 to transmit its individual number (at step S401).

On receiving the confirmation that the setting ID and the setting PASS from the inverter 10 are respectively matched with those stored in the database from the management server, the inverter 10 transmits its individual number stored in the inverter 10 itself to the management server 21 (at step S303). After confirming whether the received individual number is matched with an individual number that is stored in association with the setting ID on the database or not (at step S402), the management server 21 transmits the success or failure of the confirmation to the inverter 10, and at the same time, requests the inverter 10 to transmit settlement method information (at step S403).

On receiving the result that there is matching between both individual numbers from the management server 21, inverter 10 requests the user to input settlement information on the Web browser. When the user inputs settlement information such as the number of a settlement account and the name of the account holder from the PC 18, the inverter 10 transmits the input settlement information to the management server 21 (at step S304).

On receiving the settlement information (at step S404), the management server 21 transmits the completion of settlement information reception to the inverter 10. After the inverter 10 receives information about the completion of settlement information reception from the management server 21, the inverter 10 requests the management server 21 to transmit the relevant operation permission code. The management server 21 that is requested to transmit the operation permission code brings out the operation permission code associated with the individual number from the database, and transmits the operation permission code to the inverter 10 (at step S405).

After the inverter 10 receives the operation permission code from the management server 21 and can confirm that the received operation permission code is matched with an operation permission code stored in advance, the inverter 10 transfers to the mode of operation direction reception (at step S305). Successively, by displaying the fact that the inverter configuration about the billing has been completed on the Web browser on the PC 18 operated by the user, the billing processing configuration of the inverter is ended.

Here, although not shown in Figure 5, in the case where the setting IDs or the individual numbers are not matched with each other, a piece of processing in which the inquiry regarding the matching of the setting IDs or individual numbers to the management server is repeated a certain times is added to the control processing of the inverter 10, and in the case where the setting IDs and individual numbers are not matched with each other after the inquiry is repeated the certain times, it is preferable that, by displaying the fact that the setting IDs or individual numbers are not matched with each other on the Web browser used for the inverter configuration, the user should be urged to make the inquiry to the lease company.

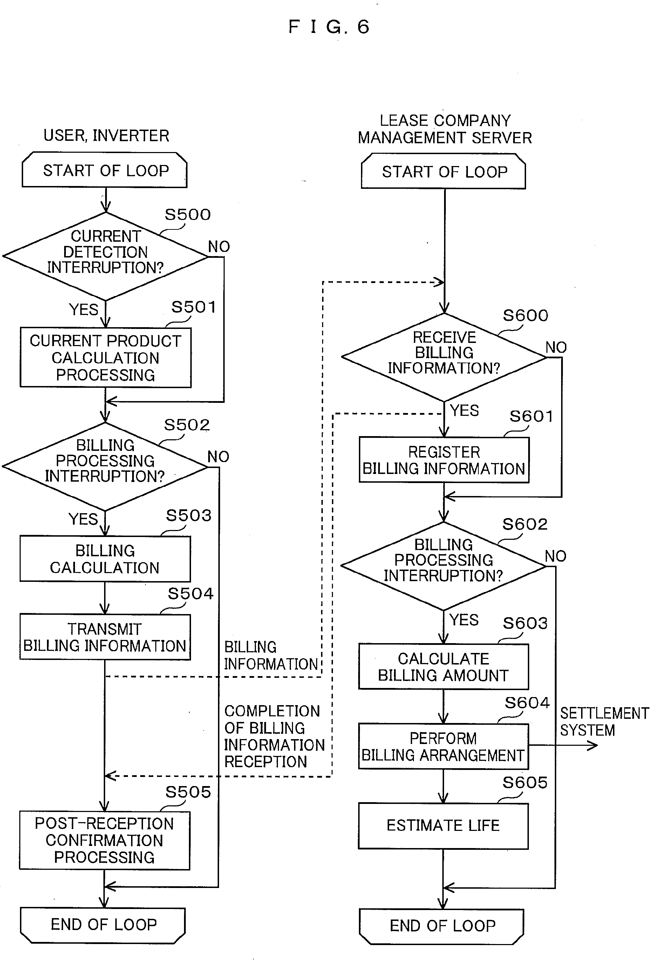

Next, the procedure of a billing processing method according to this example will be explained with reference to Figure 6. This procedure shows pieces of internal processing of the control unit 14 of the inverter 10 and the management server 21, and the flow of data between the inverter 10 and the management server 21.

First, the billing processing in the inverter 10 will be explained. In this example, in order to perform the billing processing, the control system in the control unit 14 of the inverter 10 includes: a clock showing the current time; and the output current Io of the inverter, a current time product Ci, a current product Sc, a billing amount Co, a current product calculation start time ts, a current product calculation end time tn as variables.

At step S500 in Figure 6, a current detection interruption timing is set, for example, at every current detection cycle Δti, and the calculation processing of the current product is performed every time the current detection interruption occurs (at step S501). In order to calculate the current product, phase currents Iu and Iw of the inverter are detected. After the phase currents Iu and Iw of the inverter are detected, the output current Io of the inverter is calculated on the basis of the phase currents Iu and Iw. Because the method for calculating the output current Io is a well-known method, the description of the method will be omitted in this specification.

Hereinafter, the procedure of calculating the current product will be explained. After the inverter 10 starts its operation, a current detection interruption timing occurs at the time t1, and the output current Io(t1) at the time of t1 is calculated using the detected phase currents Iu and Iw. A product of the calculated output current Io(t1) and the current detection cycle Δti is defined as a current time product Ci(t1) at the time t1. By adding a current product Sc(t1-Δti), which is the total value of current time products calculated until the previous current detection interruption timing, to the current time product Ci(t1), a current product Sc(t1) at the time t1 is calculated.

In this case, the time t1 is input as the current product calculation end time tn of the current product. In addition, it will be assumed that the time at which the calculation of the current product is started is input as the current product calculation start time ts.

As mentioned above, a current time product is calculated at every cycle Δti, that is to say, at every current detection interruption timing using the phase currents, and the current product can be obtained by sequentially accumulating current time products. In other words, the current product, which is a current time integral value, is calculated by integrating the output current value obtained from the respective phase currents with respect to time.

Next, the calculation procedure of a billing charge and the transmission procedure of the billing charge to the management server 21 will be explained.

The billing charge is calculated by billing interruption processing (at step S502). Therefore, a billing interruption cycle Δtc is set. The billing interruption cycle can be set equal to the settlement cycle of usage-based billing such as one month.

When a billing interruption occurs in the control system of the inverter 10, a billing charge is obtained by calculating the product of a current product Sc held at that time and a billing reference value, which is a predefined and held unit price data per unit current product (at step S503). Here, the billing reference value, which is the unit price data, is predefined at the time of the shipping of the inverter as mentioned above, but it is also possible to set the billing reference value using the management server 21 via the communication network 17.

After calculating the billing charge, the inverter 10 transmits the individual number of its own, the billing charge, the current product, the current product calculation start time that is a billing charge calculation start time, and a current product calculation current time that is a billing charge calculation current time to the management server 21 as billing information (at step S504). In this case, it is not always necessary that the billing information includes all the abovementioned items, and it is all right if the billing information includes part of the abovementioned items. Furthermore, the inverter 10 includes setting means for setting the destination to which the billing information is transmitted. In such a way, the billing information is regularly transmitted from the inverter 10 to the management server 21 at every billing interruption cycle Δtc.

After confirming that the management server 21 receives the billing information, the inverter 10 performs post-reception confirmation processing (at step S505). In this case, the post-reception confirmation processing is processing in which the billing charge, the current product, the current product calculation start time, and the current product calculation end time, which are already-transmitted, are stored in a storage area in the inverter 10 as already-transmitted data, and then the current time product Ci, the current product Sc, and the billing amount Co, which are variables, are cleared to zero in order to start a current product calculation anew. In addition, the current product calculation start time ts and the current product calculation end time tn are replaced with the time when the variables are set to zero.

Storing the already-transmitted data in the inverter 10 makes it possible that the user checks the billing charge and the current product after the user logins to the inverter 10 using the Web browser.

Although not shown in Figure 6, if the inverter 10 cannot receive a reception completion signal from the management server 21 after transmitting the billing information to the, it is preferable that the inverter 10 should repeatedly try to transmit the billing information several times. In the case where the inverter 10 cannot receive the reception completion signal although the billing information is repeatedly transmitted, it is preferable to practice the procedure of transmitting the billing information again after a good long time.

Next, the settlement of the billing charge by the management server 21 will be explained. When the management server 21 receives the billing information from the inverter 10 through the communication function unit 210 shown in Figure 3, the management server 21 transmits the reception completion signal to the inverter 10 after confirming the individual number included in the billing information is matched with that stored in the database 215 (at step S600). Subsequently, the management server 21 registers the billing information at step S601, calculates a billing amount (at step S603) using the billing processing unit 213 at the wake of a billing processing interruption (at step S602), and transmits information to a settlement system so that the settlement system transmits the received billing charge to a settlement account stored in association with the individual number of the inverter 10 in the database 215 of the management server (at step S604).

Furthermore, the management server executes the judgment of the life of the inverter 10 using the transmitted billing information (at step S605). The judgment of the life is executed, for example, in such a way that current products transmitted from the inverter 10 are cumulatively added, and if the resultant value obtained by cumulatively adding the current products exceeds a certain threshold, it is judged that the inverter 10 is approaching the end of its life. Accordingly, the processing of arranging a substituting inverter (not shown) is executed. Because the judgment of the life is performed by the management server 21, when the lease inverter is approaching the end of its life, a substituting inverter can immediately be delivered. Alternatively, it is also conceivable that, on the basis of a prepared reference usage limit value for the current product, a time when the current product will reach the reference usage limit value is estimated from the tendency of the current product obtained from the billing data, and a time at which the inverter should be replaced is issued by the management server.

As mentioned above, the feature of this example lies in the point that lease billing is performed on the basis of the current time integral value regarding the output current of the inverter. In addition, because the current time integral value is calculated by the inverter itself, there is an advantageous effect that the user can confirm a billing charge stored in the inverter itself without accessing the management server. Furthermore, because the current time integral value is proportional to the lives of the smoothing capacitors or the lives of the power modules of the inverter, the lease company can easily grasp the life of the leased inverter by confirming the current time integral value, so that it becomes possible to automatically judge that the inverter is approaching the end of its life and to deliver a substituting inverter to the user at an appropriate timing.

In addition, because an operation permission code is set in an inverter, and the operation permission control of the inverter can be executed through the management server, it is not necessary for the lease company to dispatch a staff to the user, and the billing charge of the inverter can be collected without fail.

Furthermore, there is a modification in which, as the references of the billing and life judgment, a current squared time integral value can be used instead of the abovementioned current product. In other words, a billing charge is obtained by calculating the product of a current squared time integral value regarding an output current value obtained from the respective phase currents and a billing reference value that is unit price data for every unit current squared time integral value that is defined and held in advance. If the lives of components in the inverter are proportional to a current squared, it is preferable that the lives of the components should be judged by means of the current squared.

In addition, although a method in which lease inverters directly communicate with the management server has been adopted in the above description, it is also conceivable that, for example, an intermediate management server is prepared, and only this intermediate management server is connected to the plural lease inverters via a communication network, and collects billing information as well. Furthermore, a scheme in which the intermediate management server transmits the billing information to the management server 21 is adopted, which can simplify the configuration of the communication network connected to the public communication network 19, and at the same time, because the lease inverters are not directly connected to the public communication network 19, attacks from the public communication network via the communication network can be prevented, so that the information securities of the lease inverters can be improved.

Alternatively, it is conceivable that each inverter transmits information regarding its current product to the server, and the server calculates a billing amount for each inverter.

As described above, this example is a power conversion device management system including a power conversion device, a management server, and a communication network that connects the power conversion device with the management server. Here, the power conversion device is configured to include a current detection unit for detecting the phase currents of a main circuit, and a communication unit that communicates with the management server via the communication network, and the management server is configured to include a billing processing unit for performing a billing procedure on the basis of a billing charge calculated from the phase currents of the main circuit that are detected by the current detection unit.

In addition, the power conversion device is configured to include a billing calculation unit for calculating the billing charge, and to transmit billing information including the billing charge to the management server via the communication network using the communication unit, and the management server is configured to receive the billing information via the communication network, and to perform the billing procedure by means of the billing processing unit.

Furthermore, a power conversion device according to this example is a power conversion device for driving an electric motor, and includes: a main circuit composed of power devices; a control unit that controls the main circuit; a current detection unit for detecting the phase currents of the main circuit, and the control device is configured to include: a communication unit that communicates with a management server via a communication network; a motor control unit that outputs a driving signal for driving the main circuit; an output current calculation unit that calculates an output current value from the phase currents; and a billing calculation unit that calculates a current product by time integrating the output current value, and calculates a billing charge on the basis of the current product.

Herewith, because the power conversion device does not includes voltage detection means, the system including this power conversion device becomes simple, and at the same time, a billing charge is calculated on the basis of the total amount of the output currents of the power conversion device, so that the charge can be imposed in conjunction with the life of the relevant power converter.

Although the example according to the present invention has been described so far, the present invention is not limited to the above described example, and can include various modifications. For example, the above example has been described in detail for better understanding of the present invention, and it is not always necessary that the present invention is limited to an example including all the components that have been explained in the above example.

### Reference Signs List

10...inverter,
11...main circuit,
12...motor,
13...fan,
14...control unit,
15, 16...current sensors,
17...communication network,
18...PC,
19...public communication network,
21...management server

## Claims

1. A power conversion device management system comprising:
a power conversion device; a management server; and a communication network that connects the power conversion device with the management server,
wherein the power conversion device includes a current detection unit for detecting the phase currents of a main circuit, and a communication unit that communicates with the management server via the communication network, and
the management server includes a billing processing unit for performing a billing procedure on the basis of a billing charge calculated from the phase currents of the main circuit that are detected by the current detection unit.

2. The power conversion device management system according to claim 1,
wherein the power conversion device includes a billing calculation unit for calculating the billing charge, and transmits billing information including the billing charge to the management server via the communication network using the communication unit, and
the management server receives the billing information via the communication network, and performs the billing procedure using the billing processing unit.

3. The power conversion device management system according to claim 2,
wherein the billing calculation unit holds unit price data per unit current product, calculates a current product that is obtained by time integrating an output current value calculated from the respective phase currents of the power conversion device, and calculates the billing charge by multiplying the current product by the unit price data.

4. The power conversion device management system according to claim 2,
wherein the billing calculation unit holds unit price data per time integration value of a unit current squared, calculates a current squared time integration value by time integrating the second power of an output current value calculated from the respective phase currents of the power conversion device, and calculates the billing charge by multiplying the current squared time integration value by the unit price data.

5. The power conversion device management system according to claim 3 or claim 4,
wherein the unit price data can be set by the management server via the communication network.

6. The power conversion device management system according to claim 3,
wherein the billing information includes: the billing charge; the individual number of the power conversion device; and the current product, a billing charge calculation start time or a billing charge calculation current time.

7. The power conversion device management system according to claim 4,
wherein the billing information includes: the billing charge; the individual number of the power conversion device; and the current squared time integration value, the billing charge calculation start time or the billing charge calculation current time.

8. The power conversion device management system according to claim 2,
wherein the billing information is transmitted from the power conversion device to the management server at regular intervals.

9. The power conversion device management system according to claim 2,
wherein the power conversion device includes means for setting a destination to which the billing information is transmitted, and
the management server includes a registration processing unit that registers the unique number of the power conversion device, customer information, and the billing address of a customer.

10. The power conversion device management system according to claim 3,
wherein the management server includes a reference usage limit value regarding the current product, estimates a time when the current product will reach the reference usage limit value in consideration of the tendency of the current product obtained from the billing information, and issues the time of replacement.

11. The power conversion device management system according to claim 4,
wherein the management server includes a reference usage limit value regarding the current squared time integration value, estimates a time when the current squared time integration value will reach the reference usage limit value in consideration of the tendency of the current squared time integration value obtained from the billing information, and issues the time of replacement.

12. The power conversion device management system according to claim 1,
wherein the power conversion device management includes a function in which an operation permission code that determines whether the power conversion device can operate or not is set in the power conversion device itself, and the operation enable/disable of the power conversion device is controlled by the management server.

13. A power conversion device for driving an electric motor, the power conversion device comprising:
a main circuit composed of power devices;
a control unit for controlling the main circuit;
a current detection unit for detecting the phase currents of the main circuit,
wherein the control unit includes:
a communication unit that communicates with a management server via a communication network;
a motor control unit that outputs a driving signal for driving the main circuit;
an output current calculation unit that calculates an output current value from the phase currents; and
a billing calculation unit that calculates a current product by time integrating the output current value, and calculates a billing charge on the basis of the current product.

14. The power conversion device according to claim 13,
wherein the billing calculation unit holds unit price data per unit current product, and calculates the billing charge by multiplying the current product by the unit price data.

15. The power conversion device according to claim 13,
wherein the billing calculation unit holds unit price data per time integration value of a unit current squared, calculates a current squared time integration value by time integrating the second power of the output current value, and calculates the billing charge by multiplying the current squared time integration value by the unit price data.
